# EUROPEAN PATENT APPLICATION

(11) **EP 0 621 502 A1**
(43) Date of publication of application: **26.10.1994**
(21) Application number: 94105637.6
(22) Date of filing: 12.04.1994
(51) Int. Cl.: G02F 1/1339

(54) **Liquid crystal electro-optical device**

(30) Priority: 23.04.1993 JP 97859/93
(71) Applicant: SEIKO INSTRUMENTS INC., Tokyo 136 (JP)
(72) Inventor: Aoya, Osamu, c/o Akita Seimitsu Denshi, Tokyo (JP)
(74) Representative: Fleuchaus, Leo, Dipl.-Ing.

(57) **Abstract**

The object of the invention is to hold a uniform gap of a liquid crystal cell and, as a result of the uniform gap thickness, to increase the picture quality of a liquid crystal electro-optical device.

Two kinds of gap materials are included in the sealing portion, and at least one of the gap materials consists of glass balls which have almost the same size as the sealing gap thickness of a liquid crystal electro-optical device.

The invention guarantees uniform picture quality in its color tone and contrast.

## Description

This invention relates to controlling the gap thickness of a liquid crystal electro-optical device.

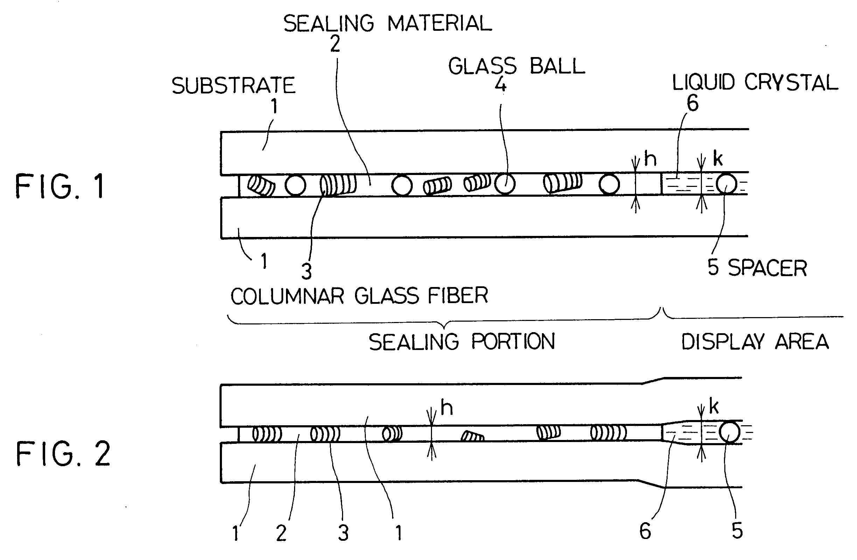

Figure 2 shows the seating portion structure of a conventional liquid crystal electro-optical device. Glass fibers 3 are included in the sealing material 2 for determining and maintaining a sealing portion gap of thickness h, and a liquid crystal 6 is sealed between upper and lower substrates 1 having transparent electrode films thereon.

The sealing material 2 includes glass fibers 3 of 1 wt% to sealing material, and the diameter of the glass fibers 3 is about 0.4 µm bigger than the desired thickness of the sealing gap for controlling its thickness. A pressure of 0.8 kg/cm² is applied to form the sealing portion.

However, the actual gap at the sealing portion usually becomes 0.1 µm to 0.2 µm narrower than the desired gap; thereby, the gap thickness difference between the cell gap k and the sealing portion gap h becomes about 0.2 µm to 0.3 µm which causes defects such as uneven tone in the conventional liquid crystal electro-optical display.

If the desired gap thickness is 7.0 µm, 1 wt% of 7.4 µm glass fibers should be included in the sealing material and a pressure of 0.8 kg/cm² is required to seal the substrates; however, the actual cell gap thickness turns out to be 6.8 µm to 6.9 µm.

The Super Twisted Nematic mode is mostly used for a liquid crystal electro-optical device because of its superiority of electro-optical characteristics. Uniformity of cell gap thickness is one of the most important qualities required for a liquid crystal cell.

As Figure 2 shows, cell gap thickness means gap distance between upper and lower glass substrates and the gap is held by having spacers 5 in the display area and glass fibers 3 included in the sealing material 2. Uniformity required for a cell gap thickness should be within ± 0.1 µm. Without this cell gap uniformity, problems evolve, such as irregular tone or bad contrast in the liquid crystal electro-optical device.

As Figure 2 shows, there evolves a gap difference between cell gap thickness k and sealing portion gap thickness h. This difference is caused at the time of crimp, and the sealing portion gap thickness becomes 0.1 µm to 0.2 µm lower than the desired gap thickness. Even if bigger particles of glass fiber are used, the cell gap thickness is still uneven or worse, which creates an even larger color tone difference between the tone of the display area and that of the margin area. It was very hard to hold the whole cell gap uniform.

In order to make the cell gap thickness of a liquid crystal electro-optical device uniform, in addition to glass fibers included in the sealing portion, good quality glass balls, having a diameter about the same size as the desired gap are mixed into the sealing material.

By mixing conventional glass fibers and this invention's glass balls having a diameter about the same as the desired gap thickness with the sealing material, the glass balls regulate the cell gap thickness and create a uniform gap.

### BRIEF DESCRIPTION OF THE DRAWINGS

Figure 1 shows a sectional view of a liquid crystal cell of this invention's liquid crystal electro-optical device.

Figure 2 shows a sectional view of a liquid crystal cell of a conventional liquid crystal electro-optical device.

The invention is described using the figures in this embodiment.

Figure 1 shows a sectional view of this invention's liquid crystal electro-optical device.

In order to hold the desired gap thickness h at a sealing portion between upper and lower glass substrates 1, 1 wt% of glass fibers 3 being 0.3 µm to 0.5 µm bigger than the desired gap thickness and 1.5 wt% of glass balls 4 having the same size as the gap thickness are included in an epoxy group sealing material 2 at the sealing portion. In the display area, display area spacers such as plastic balls and so on are provided, having the same size as the cell gap thickness in order to hold the cell gap thickness.

The following are standard deviation values for each of the gap material particle sizes.
Glass fiber : 0.08 to 0.12 µm
Glass ball : 0.05 to 0.08 µm
Including glass fibers and glass balls in the sealing portion and crimping upper and lower substrates together a 0.8 kg/cm² pressurization is applied.

For example, if a 7.0 µm gap thickness is desired, 1 wt% of 7.4µm glass fibers and 1.5 wt% of 7.0 µm glass balls should be included in the epoxy group sealing material, which should be coated at a thickness of 30 µm, and also, 7.0 µm plastic balls are dispersed in the cell display area, and then, upper and lower substrates are laminated and crimped together by pressurization of 0.8 kg/cm². If only 3 wt% of glass balls 4 are included in the sealing material, the glass balls cannot bear the pressure from the substrates and will then be broken down, since the contact areas of the glass balls to support the substrates are only dots.

On the other hand, the contact areas of the glass fibers to support the substrates are bigger than the ones of the glass balls since the glass fibers, having circular cylindrical shapes, are very flexible to crash to provide more contacting areas in order to support cell gaps between the substrates. Thereby, the glass fibers can take buffering pressure at the time of crimp and also, glass balls can act as a stopper and regulate the gap thickness.

The invention as described above, by including glass balls in the sealing material in addition to the conventional glass fibers, enables desired uniform ce 11 gap thickness of a liquid crystal electro-optical device, which resolves the problems such as color tone difference between the sealing portion and the display area, and enables uniform color tone and contrast.

## Claims

1. A liquid crystal electro-optical device comprising:
upper and lower substrates having transparent electrodes on each facing surface;
a liquid crystal sealed by coating a sealing material and crimping upper and lower substrates; and
a sealing material including gap materials for holding the sealing gap thickness;
wherein at least one of the gap materials consists of glass balls, the diameter of which is almost the same size as the gap thickness at the sealing portion.

2. A liquid crystal electro-optical device comprising:
upper and lower substrates having transparent electrodes on each facing surface;
a liquid crystal sealed by coating a sealing material and crimping upper and lower substrates; and
a sealing material including two kinds of gap materials for holding the sealing gap thickness;
wherein, at least, one of the gap materials consists of glass balls, the diameter of which is almost the same size as the gap thickness at the sealing portion.

3. A liquid crystal electro-optical device comprising:
upper and lower substrates having transparent electrodes on each facing surface;
a liquid crystal sealed by coating a sealing material and crimping upper and lower substrates; and
a sealing material including two kinds of gap materials for holding the sealing gap thickness;
wherein one of the gap materials consists of circular cylindrical glass fibers and the other consists of glass balls, the diameter of which is almost the same size as the gap thickness at the sealing portion.
